(19) Europäisches Patentamt
European Patent Office
Office européen des brevets

(11) Veröffentlichungsnummer: **0 104 210**
**B1**

(12) **EUROPÄISCHE PATENTSCHRIFT**

(45) Veröffentlichungstag der Patentschrift: **03.06.87**

(51) Int. Cl.⁴: **B 01 D 15/08,** B 01 J 20/30, G 01 N 30/00

(21) Anmeldenummer: **83901065.9**

(22) Anmeldetag: **25.03.83**

(86) Internationale Anmeldenummer: **PCT/DE 83/00056**

(87) Internationale Veröffentlichungsnummer: **WO 83/03363 (13.10.83** Gazette **83/24)**

(54) **CHROMATOGRAPHISCHE TRENNUNG VON NUCLEINSÄUREN.**

(30) Priorität: **26.03.82 DE 3211309**

(43) Veröffentlichungstag der Anmeldung: **04.04.84 Patentblatt 84/14**

(45) Bekanntmachung des Hinweises auf die Patenterteilung: **03.06.87 Patentblatt 87/23**

(84) Benannte Vertragsstaaten: **CH FR GB LI**

(56) Entgegenhaltungen:
**DE - A - 2 601 930**
**FR - A - 2 462 183**
**GB - A - 2 075 362**
**US - A - 4 029 583**
**US - A - 4 118 316**
**US - A - 4 140 653**

(73) Patentinhaber: **RIESNER, Detlev, Eichenwand 15, D-4000 Düsseldorf 12 (DE)**
Patentinhaber: **COLPAN, Metin, Christoph-Strasse 67, D-4000 Düsseldorf 1 (DE)**

(72) Erfinder: **RIESNER, Detlev, Eichenwand 15, D-4000 Düsseldorf 12 (DE)**
Erfinder: **COLPAN, Metin, Christoph-Strasse 67, D-4000 Düsseldorf 1 (DE)**

(74) Vertreter: **Werner, Hans-Karsten, Dr. et al, Deichmannhaus am Hauptbahnhof, D-5000 Köln 1 (DE)**

**EP 0 104 210 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die chromatographische Trennung von Nucleinsäuren.

Der Fortschritt der Biochemie, Molekularbiologie und Polymerforschung und deren Anwendung in Technik, Medizin, Pharmazie und Gentechnologie erfordert die schnelle und systematische Trennung und Isolierung von Makromolekülen. Von besonderem Interesse in den Biowissenschaften sind dabei hochmolekulare Nukleinsäuren. So z.B. tritt in der Gentechnologie häufig das Problem auf, dass aus einem natürlich vorkommenden Gemisch von 100 und mehr verschiedenen hochmolekularen Nukleinsäuren eine einzige molekulare Spezies bis zur Homogenität gereinigt werden muss. Bekanntlich sind die einzelnen Nucleinsäuren durch Molekulargewicht, Grösse und Form zu charakterisieren.

Für viele Trennprobleme haben sich chromatographische Verfahren als vorteilhaft erwiesen. Die meisten Vorteile in bezug auf Auflösung, geringen Zeitaufwand und Reproduzierbarkeit bietet dabei die Hochdruckflüssigkeitschromatographie (HPLC). Diese Methode wurde bisher in Form der Gelpermeationschromatographie (GPC), der Ionenaustauschchromatographie und der Reversed-Phase Chromatografie (RPC) angewendet. Dabei traten für die hier zu behandelnden Trennprobleme folgende Nachteile auf:

GPC ist nur in der Lage, sehr kleine von sehr grossen Molekülen zu trennen.

Bisher bekannte Ionenaustauscher und Reversed-Phase Trägermaterialien konnten mit hoher Auflösung nur für kleine Makromoleküle wie Oligonukleotide, Peptide und Proteinbruchstücke eingesetzt werden. Bei der Trennung von hochmolekularen Makromolekülen wie beispielsweise Messenger-Ribonukleinsäuren, Viren, Viroiden, Deoxyribonukleinsäure-Fragmenten und grossen Proteinen konnte die erforderte Auflösung nicht erreicht werden.

Das hydrophob-ionische-RPC-5 Chromatografiematerial wie beispielsweise von Larson, J.E. et al. (The Journal of Biological chemistry [1979] 254, 5535-5541) beschrieben, wurde zwar erfolgreich bei der Trennung von Deoxyribonukleinsäure-Fragmenten eingesetzt, kann jedoch nicht auf die HPLC adaptiert werden, da das Trägermaterial nicht druckstabil ist. Man muss als Nachteile die niedrigen Flussraten, dass heisst sehr lange Chromatografiezeiten und eine geringe chromatografische Stabilität des Chromatografiematerials in Kauf nehmen. Aufgrund der chemischen Eigenschaften des RPC-5 Materials war es nicht möglich, komplexe Ribonukleinsäuregemische und Proteingemische aufzutrennen.

Mit den bisher bekannten Chromatografieverfahren war es nicht möglich, komplexe makromolekulare Gemische, wie Nucleinsäuren, mit hoher Auflösung und hoher Geschwindigkeit in die einzelnen Molekülspezies zu trennen und zu isolieren oder diese Gemische zu analysieren.

Aus der US-A 4 029 583 ist ein einen Hohlraumdurchmesser von bis zu 50 nm aufweisendes Silicagel als chromatographisches Trägermaterial bekannt, an das mittels eines Silanisierungsreagenzes eine stationäre Phase mit Anionen- oder Kationenaustauscher bildenden Gruppen gebunden ist, welche mit den zu trennenden Substanzen in Wechselwirkung treten. Damit die stationäre Phase eine möglichst grosse Oberfläche bedeckt und die zu trennenden Substanzen möglichst ungehindert eindringen können, wird hochporöses Silicagel verwendet, wobei die Dimensionen des Silicagels ansonsten keine Rolle spielen. Das silanisierte Silicagel wird mit Wasser in Berührung gebracht. Dabei besteht die Gefahr, dass die stationäre Phase polymerisiert und die Poren schliesst. Zwar werden in der Druckschrift neben Proteinen auch Peptide und Nucleinsäuren als zu trennende Substanzen erwähnt, in den Beispielen wird jedoch nur die Trennung von Proteinen beschrieben.

Die Erfindung macht es sich zur Aufgabe, die chromatographische Trennung von Nucleinsäuren ohne die angegebenen Nachteile zu ermöglichen. Insbesondere soll es möglich sein, Nucleinsäure-Gemische der verschiedensten Art, die Komponenten mit sehr unterschiedlichen Abmessungen, beispielsweise im Bereich von 3 bis 100 nm enthalten, in einem einzigen Durchlauf mit sehr hoher Auflösung und bei hoher Durchsatzgeschwindigkeit in ihre Komponenten aufzutrennen. Weiterhin sollten die verwendeten Trägermaterialien bei hohem Druck, weiten Temperaturbereichen und mit langer Lebensdauer einsetzbar sein. Auch wird eine hohe Beladbarkeit mit den zu trennenden Nucleinsäuren angestrebt. Diese Aufgabe wird gemäss der in Anspruch 1 und den folgenden Ansprüchen beschriebenen Erfindung gelöst.

Nach der Erfindung wird also ein chromatographisches Trägermaterial verwendet, bei dem der Durchmesser der Hohlräume das 1 bis 20-fache der grössten Abmessung der jeweils zu isolierenden Nucleinsäure oder der grössten Abmessung der grössten aller im Gemisch enthaltenen Nukleinsäuren beträgt.

Zur Herstellung des erfindungsgemäss verwendeten chromatographischen Trägermaterials wird dasselbe mit einem Silanisierungsreagenz der allgemeinen Formel

$$R_1R_2R_3SiR_4 \qquad (I)$$

umgesetzt, wobei $R_1$ ein Alkoxyrest mit 1 bis 10 C-Atomen, insbesondere $-OCH_3$, $-OC_2H_5$ oder $-OC_3H_7$, oder ein Halogen, insbesondere Cl, oder eine Dialkylaminogruppe mit identischen oder unterschiedlichen Alkylresten mit 1 bis 6 C-Atomen ist,

$R_2$ und $R_3$ ein Kohlenwasserstoffrest mit 1 bis 10 C-Atomen, insbesondere $-CH_3$, $-C_2H_5$ oder $-C_3H_7$, oder ein Alkoxyrest mit 1 bis 10 C-Atomen, insbesondere $-OCH_3$, $-OC_2H_5$ oder $-OC_3H_7$, oder ein Halogenatom oder ein durch mindestens eine Oxa- oder Aminogruppe unterbrochener Alkylrest mit 4 bis 20 C-Atomen ist, wobei dieser Rest auch ein- oder mehrfach durch Halogen, Cyan,

Nitro, Amino, Monoalkylamino, Dialkylamino, Hydroxy oder Aryl substituiert sein kann, und
$R_4$ eine Kohlenwasserstoffkette mit 1 bis 20 C-Atomen oder ein durch mindestens eine Oxa- oder Aminogruppe unterbrochener Alkylrest ist, wobei dieser Rest auch ein- oder mehrfach mit Halogen, Cyan, Nitro, Amino, Monoalkylamino, Dialkylamino, Alkoxy, Hydroxy, Aryl und/oder Epoxy substituiert sein kann, insbesondere

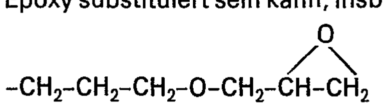

ist, worauf
das Trägermaterial mit einem Reagenz der allgemeinen Formel

$$X{-}R{-}Y \qquad (II)$$

zum endgültigen Trägermaterial umgesetzt wird, wobei X eine Amino-, Hydroxy-, Epoxy-Gruppe oder ein Halogenatom ist,
R eine Kohlenwasserstoffkette mit 2 bis 20 C-Atomen oder ein durch mindestens eine Oxa- oder Aminogruppe unterbrochener Alkylrest ist, wobei dieser Rest auch ein- oder mehrfach mit Halogen, Cyan, Nitro, Amino, Monoalkylamino, Dialkylamino, Alkoxy, Hydroxy, Aryl und/oder Epoxy substituiert sein kann und
Y ein Kohlenwasserstoffrest mit 1 bis 10 C-Atomen und Anionen- oder Kationenaustauscher bildenden funktionellen Gruppen ist, der ein- oder mehrfach mit Amino-, Monoalkylamino-, Dialkylamino-, Quartäralkylamino-, Carboxyl-, Borsäure-, Alkyl- und Arylsulfonsäure-Gruppen substituiert sein kann.

Entgegen der bisherigen Meinung in der Fachliteratur ist es erfindungsgemäss möglich, komplexe Nucleinsäuren- Gemische mit einem sehr weiten Molekülgrössenspektrum mit sehr hohem Auflösungsvermögen aufzutrennen. Aufgrund ihrer Einfachheit und der preiswerten und stabilen Trägermaterialien ist die Erfindung neben der wissenschaftlichen Anwendung vor allem für den industriellen Einsatz geeignet.

Entgegen der bisher bekannten Verfahren, die ausschliesslich auf chemischen Eigenschaften der Trägermaterialien beruhen, geht die Erfindung von der Erkenntnis aus, dass die Grösse und/oder Form der Hohlräume der Trägermaterialien von ganz wesentlicher Bedeutung für die Trennung ist, und in bestimmter Relation zur Grösse der zu isolierenden Nucleinsäure stehen muss. Es hat sich gezeigt, dass die Grösse der Hohlräume das 1–20fache der zu isolierenden Nucleinsäure betragen muss. Sollten die Abmessungen der einzelnen zu trennenden Komponenten mehr als den Faktor 20 voneinander verschieden sein, ist es selbstverständlich möglich, die Trennung in mehreren Schritten durchzuführen.

Durch die erfindungsgemäss vorgesehene Modifizierung der Oberfläche des Trägermaterials werden die für die Wechselwirkung mit den zu trennenden Substanzen verantwortlichen Gruppen über flexible Kettenmoleküle auf der Oberfläche verankert. Diese Wirkung wird beispielsweise durch Verwendung von μ-Glycidyloxypropyltrimethoxysilan und N,N-Dimethylaminoethanol erreicht. Als wechselwirkende Gruppen kommen stark und schwach basische Anionenaustauscher sowie stark und schwach saure Kationenaustauscher in Frage.

Da es sich gezeigt hat, dass bei vielen Anwendungen zweiwertige Metallionen zu erheblichen Störungen Anlass geben könnten, wird gemäss der Erfindung weiterhin vorgeschlagen, dass alle mit den Lösungsmitteln in Berührung kommenden Teile aus Edelmetall, Kunststoff oder Glas bestehen, bzw. entsprechende Beschichtungen aufweisen.

Die Erfindung ist anhand der Figuren näher erläutert.

Es zeigen:

Fig. 1 eine an sich bekannte Vorrichtung zur Durchführung eines chromatografischen Verfahrens.

Fig. 2 Ausschnitte von Querschnitten durch Trägermaterialien mit verschiedenen Hohlraumgrössen.

Fig. 3, 4, 5 Grafische Darstellung verschiedener Elutionsprofile für verschiedene Hohlraumgrössen und Molekülgrössen.

Die in Figur 1 dargestellte Vorrichtung besteht aus einem druckfesten Zylinder (2), der mit einem Zuführungsstutzen (1) und einem Auslaufstutzen (3) versehen ist. Im unteren Teil des Zylinders (2) ist ein sehr feinmaschiges, chemisch inertes Sieb (4) angeordnet. Über dem Sieb (4) befindet sich der aus diskreten makroporösen Silicagelteilchen (5) bestehende chromatografische Träger. Die zu trennenden Nucleinsäuren werden in einer Lösung über den Zuführungsstutzen (1) eingefüllt und in den Hohlräumen des Trägers (5) adsorbiert. Bei dem anschliessenden Elutionsschritt werden die zu trennenden Nucleinsäuren durch ein Lösungsmittel kontinuierlich variierender Zusammensetzung eluiert. Aufgrund der zeitlichen Änderung des Lösungsmittels treten im Ausfluss (3) die getrennten Komponenten zeitlich nacheinander aus.

Anhand von Figur 2 wird der Einfluss der Hohlraumgrösse des Trägermaterials auf die Wechselwirkung mit dem Nucleinsäure-Makromolekül erläutert. Das Makromolekül (6) kann in einen zu kleinen Hohlraum (7) des Trägermaterials (5) nicht genügend eindringen, um eine optimale Wechselwirkung einzugehen. Der von seinen Abmessungen günstigere Hohlraum (8) erlaubt dagegen sehr intensive Wechselwirkungen. Um die Wechselwirkung zu erhöhen, sind die wechselwirkenden Gruppen über flexible Kettenmoleküle (9) auf der Hohlraumoberfläche verankert. Ist dagegen der Hohlraum (10) zu gross, so ist wieder mit einer Abnahme der Wechselwirkung zu rechnen. Die Kettenmoleküle haben in diesem Beispiel folgende chemische Struktur:

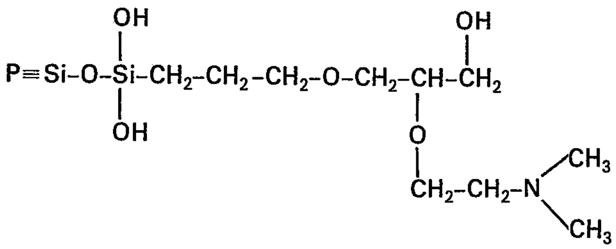

Die flexible Kette γ-Glycidyloxypropyltrimethoxysilan ist an der einen Seite am Träger-Silicagel (P) verankert und trägt am anderen Ende die Anionenaustauschergruppe N,N-Dimethylamino.

Die beschriebene chemische Modifikation wurde auf sphärische Silicagele mit 10 µm Korngrösse und Hohlraumgrössen von 10, 50 und 400 nm angewendet. Dazu werden 50 g Silicagelteilchen in einem 1000 ml Dreihalskolben bei einem Druck von <1 mbar 24 h bei einer Temperatur von 240°C aktiviert. Nach dem Abkühlen wurde mit trockenem Stickstoff belüftet und mit 500 ml trockenem γ-Glycidyloxypropyltrimethoxysilan versetzt. Die Umsetzung erfolgte 8 h bei 220°C unter Stickstoffatmosphäre und unter ständigem Rühren. Nach der Umsetzung wurde das überschüssige γ-Glycidyloxypropyltrimethoxysilan abgesaugt und das Produkt Epoxy-Silica mehrmals mit trockenem Dioxan gewaschen. Das Epoxy-Silica wurde mit einem Vierhalskolben mit Innenthermometer, Rückflusskühler, Rührer und Stickstoffeinleitungsrohr mit 500 ml trockenem N-N-Dimethylaminoethanol versetzt. Die Reaktion wurde durch 1 ml $BF_3$/Ether katalysiert und 24 h unter Rückfluss gekocht. Nach der Reaktion wurde das Dimethylamino-Silicagel abgesaugt und mehrmals mit Dioxan, Methanol und Ether gewaschen und bei 50°C getrocknet. Die Ausbeute betrug 51,5 g.
In Figuren 3 bis 5 sind Trennbeispiele von kurzkettigen Nukleinsäuren (Figur 3) und langkettigen Nukleinsäuren (Figuren 4, 5) dargestellt. Die Durchmesser der Hohlräume sind – wie in der Zeichnung angegeben – 10, 50 und 400 nm. Die Konzentration der eluierten Komponenten wird durch die UV-Absorption bei 260 nm gemessen und gegen die Zeit aufgetragen.

Daraus lassen sich folgende Ergebnisse ablesen. Kurzkettige Nukleinsäuren mit einer Länge von 2 bis 3 nm werden optimal auf einer Hohlraumgrösse von 10 nm getrennt (Figur 3). Als ein Beispiel für eine Trennung langkettiger Nukleinsäuren wurde ein natürliches Gemisch von transfer RNA (8 nm Grösse), ribosomaler 5SRNA (11 nm Grösse), 9S messenger RNA (30 nm Grösse), und Viroid-RNA (45 nm Grösse, eine pflanzenpathogene infektiöse RNA) gewählt. Es ist in Figur 4 deutlich zu sehen, dass die grösste gewählte Porengrösse die beste Trennung ergibt, wobei nicht ausgeschlossen ist, dass mit einer Hohlraumgrösse, die zwischen 50 und 400 nm liegt, eine noch bessere Trennung zu erzielen wäre. In Figur 5 ist das Beispiel aus Figur 4 durch langsamere Elution weiter optimiert worden. Es wird eine vollständige Trennung aller 4 Komponenten erreicht.

Die in den angegebenen Beispielen verwendeten Dimethylamino-Silicagele hatten die Beladbarkeit von 4,8 mg Nukleinsäuregemisch/g (10 nm), 17,2 mg Nukleinsäuregemisch/g (50 nm) und 5,6 mg Nukleinsäuregmisch/g (400 nm).

Das erfindungsgemäss beschriebene Verfahren ist das erste chromatografische Verfahren, das folgende Eigenschaften hat:
1. Allgemeine Anwendbarkeit zur Trennung von Nucleinsäuren.
2. Kurze Chromatografiezeiten und hohe Reproduzierbarkeit der Elutionsprofile durch die Verwendung von durckstabilen Trägern in HPLC Apparaturen.
3. Hohe Beladbarkeit.
4. Chromatografiematerialien mit Langzeitstabilität (kein «Ausbluten» der Chromatografiesäulen)

**Patentansprüche**

1. Verwendung eines porenartige Hohlräume enthaltenden chromatographischen Trägermaterials zur chromatographischen Trennung von Nucleinsäuren, wobei die Grösse der Hohlräume das 1 bis 20-fache der grössten Abmessung der jeweils zu isolierenden Nucleinsäure oder der grössten Abmessung der grössten aller im Gemisch enthaltenen Nucleinsäuren beträgt, hergestellt nach folgendem Verfahren:
a) das eine Hohlraumgrösse von 10 bis 1000 nm, eine spezifische Oberfläche von 5 bis 800 $m^2/g$ und eine Korngrösse von 3 bis 100 µm aufweisende Trägermaterial wird mit einem Silanisierungsreagens der allgemeinen Formel

$$R_1R_2R_3SiR_4 \qquad (I)$$

umgesetzt, wobei
$R_1$ ein Alkoxyrest mit 1 bis 10 C-Atomen oder ein Halogenatom oder eine Dialkylaminogruppe mit Alkylresten mit 1 bis 6 C-Atomen ist,
$R_2$ und $R_3$ ein Kohlenwasserstoffrest mit 1 bis 10 C-Atomen oder ein Alkoxyrest mit 1 bis 10 C-Atomen oder ein Halogenatom oder ein durch mindestens eine Oxa- oder Aminogruppe unterbrochener Alkylrest mit 4 bis 20 C-Atomen ist, und
$R_4$ eine Kohlenwasserstoffkette mit 1 bis 20 C-Atomen oder ein durch mindestens eine Oxa- oder Amino-Gruppe unterbrochener Alkylrest ist, worauf
b) das Trägermaterial mit einem Reagenz der allgemeinen Formel

$$X–R–Y \qquad (II)$$

zum endgültigen Trägermaterial umgesetzt wird, wobei X eine Amino-, Hydroxy-, Epoxy-Gruppe oder ein Halogenatom ist,
R eine Kohlenwasserstoffkette mit 2 bis 20 C-Atomen oder ein durch mindestens eine Oxa- oder Aminogruppe unterbrochener Alkylrest ist, und
Y ein Kohlenwasserstoffrest mit 1 bis 10 C-Atomen und Anionen- oder Kationenaustauscher bildenden funktionellen Gruppen ist,
wobei bei den Verfahrensschritten in trockener Umgebung gearbeitet wird.

2. Verwendung nach Anspruch 1, dadurch gekennzeichnet, dass das Trägermaterial eine Hohlraumgrösse von 50 bis 400 nm und eine spezifische Oberfläche von höchstens 200 $m^2/g$ aufweist.

3. Verwendung nach Anspruch 1 oder 2, dadurch gekennzeichnet, dass das Trägermaterial Siliciumdioxid ist.

4. Verwendung nach einem der Ansprüche 1 bis 3, dadurch gekennzeichnet, dass die Hohlraumquerschnitte möglichst konstant sind.

5. Verwendung nach einem der Ansprüche 1 bis 4, dadurch gekennzeichnet, dass der Querschnitt der Hohlräume um einen Faktor 3 grösser oder kleiner als der Optimalquerschnitt ist.

6. Verwendung nach einem der Ansprüche 1 bis 5, dadurch gekennzeichnet, dass der Querschnitt der Hohlräume kreisförmig und deren Oberfläche halbkugelförmig ist.

7. Verwendung nach einem der Ansprüche 1 bis 4, dadurch gekennzeichnet, dass die Hohlräume röhrenförmig sind.

8. Verwendung nach einem der Ansprüche 1 bis 7, dadurch gekennzeichnet, dass die die zu trennenden Nucleinsäuren enthaltende Lösung und die Elutionsmittel, beispielsweise durch Verwendung von Edelmetall, Glas und/oder Kunststoff für Säulen, Röhren, Ventile bzw. Pumpen, frei von zweiwertigen Metallionen gehalten werden.

## Claims:

1. Use of a chromatographic carrier material containing pore-like voids for the chromatographic separation of nucleic acids, wherein the size of the voids is from 1 to 20 times the largest dimension of the respective nucleic acid to be isolated or the largest dimension of the biggest of all nucleic acids contained in the mixture, said carrier material having been prepared by the following process:
a) The carrier material having a void size of from 10 to 1,000 nm, a surface area of from 5 to 800 $m^2/g$ and a particle size of from 3 to 100 $\mu m$ is reacted with a silanating reagent of the general formula

$$R_1R_2R_3SiR_4 \qquad (I)$$

wherein
$R_1$ is an alkoxy residue having from 1 to 10 carbon atoms or a halogen atom or a dialkylamino group containing alkyl moieties having from 1 to 6 carbon atoms,
$R_2$ and $R_3$ each are a hydrocarbon residue having from 1 to 10 carbon atoms or an alkoxy residue having from 1 to 10 carbon atoms or a halogen atom or an alkyl residue having at least from 4 to 20 carbon atoms interrupted by at least one oxa or amino group, and
$R_4$ is a hydrocarbon chain having from 1 to 20 carbon atom or an alkyl residue interrupted by at least one oxa or amino group, whereupon,
b) in order to form the final carrier material, the carrier material is reacted with a reagent of the general formula

$$X\text{–}R\text{–}Y \qquad (II)$$

wherein
X is an amino, hydroxy or epoxa group or a halogen atom,
R is a hydrocarbon chain having from 2 to 20 carbon atom or an alkyl residue interrupted by at least one oxa or amino group, and
Y is a hydrocarbon residue having from 1 to 10 carbon atoms and containing functional groups forming anion or cation exchangers,
while in the process steps there has been operated in a dry environment.

2. Use according to claim 1, characterized in that the carrier material has a void size of from 50 to 400 nm and a surface area of at most 200 $m^2/g$.

3. Use according to claims 1 or 2, characterized in that the carrier material is silicon dioxide.

4. Use according to anyone of claims 1 to 3, characterized in that the void cross sections are as constant as possible.

5. Use according to anyone of claims 1 to 4, characterized in that the void cross sections are by a factor of 3 larger or smaller than the optimum cross section.

6. Use according to anyone of claims 1 to 5, characterized in that the void cross sections are circular and the surfaces thereof are semispherical.

7. Use according to anyone of claims 1 to 4, characterized in that the voids are tubular in shape.

8. Use according to anyone of claims 1 to 7, characterized in that the solution containing the nucleic acids to be separated and the eluants are kept free from divalent metal ions, for example by using noble metal, glass and/or synthetic material for columns, pipes, valves and/or pumps, respectively.

## Revendications

1. Utilisation d'un support chromatographique contenant des cavités du genre pores pour la séparation chromatographique d'acides nucléiques, la dimension des cavités étant de 1 à 20 fois la plus grande dimension de l'acide nucléique à isoler ou la plus grande dimension du plus gros des acides nucléiques contenus dans le mélange, ce support étant préparé par le procédé suivant:

a) on fait réagir le support, qui a une dimension de cavités de 10 à 1000 nm, une surface spécifique de 5 à 800 $m^2/g$ et une grosseur de particules de 3 à 100 µm, avec un réactif de silylation de formule générale

$$R_1R_2R_3SiR_4 \qquad (I)$$

$R_1$ étant un radical alcoxy de 1 à 10 atomes de carbone ou un atome d'halogène ou un groupe dialkylamino à radicaux alkyles de 1 à 6 atomes de carbone,
$R_2$ et $R_3$ étant un radical d'hydrocarbure de 1 à 10 atomes de carbone ou un radical alcoxy de 1 à 10 atomes de carbone ou un atome d'halogène ou un radical alkyle de 4 à 20 atomes de carbone interrompu par au moins un groupe oxa ou amino, et
$R_4$ étant un radical d'hydrocarbure de 1 à 20 atomes de carbone ou un radical alkyle interrompu par au moins un groupe oxa ou amino, après quoi
b) on transforme le support en le support final avec un réactif de formule générale

$$X\text{-}R\text{-}Y \qquad (II)$$

X étant un groupe amino, hydroxy ou époxy ou un atome d'halogène,
R étant un radical d'hydrocarbure de 2 à 20 atomes de carbone ou un radical alkyle interrompu par au moins un groupe oxa ou amino, et
Y étant un radical d'hydrocarbure de 1 à 10 atomes de carbone et à groupes fonctionnels échangeurs d'anions ou de cations,
les opérations étant faites en conditions anhydres.

2. Utilisation selon la revendication 1, caractérisée en ce que le support a une dimension de cavités de 50 à 400 nm et une surface spécifique d'au plus 200 $m^2/g$.

3. Utilisation selon l'une des revendications 1 et 2, caractérisée en ce que le support est du dioxyde de silicium,

4. Utilisation selon l'une des revendications 1 à 3, caractérisée en ce que les sections des cavités sont autant que possible constantes.

5. Utilisation selon l'une des revendications 1 à 4, caractérisée en ce que la section des cavités est trois fois plus grande ou plus petite que la section optimale.

6. Utilisation selon l'une des revendications 1 à 5, caractérisée en ce que la section des cavités est circulaire et leur surface hémisphérique.

7. Utilisation selon l'une des revendications 1 à 4, caractérisée en ce que les cavités sont tubulaires.

8. Utilisation selon l'une des revendications 1 à 7, caractérisée en ce que la solution contenant les acides nucléiques à séparer, et les éluants, sont maintenus exempts d'ions métalliques divalents par exemple par utilisation de métal précieux, verre et/ou matière plastique pour les colonnes, tubes, robinets et pompes.

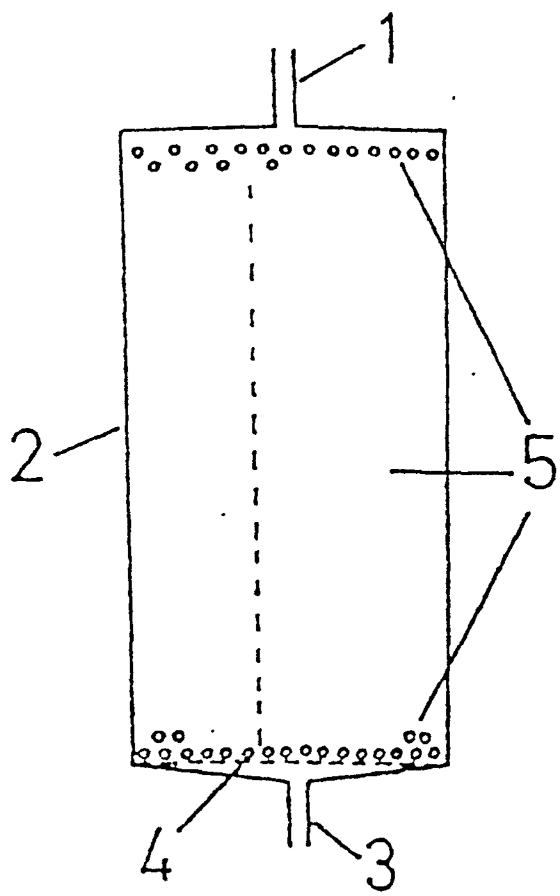


Fig. 1

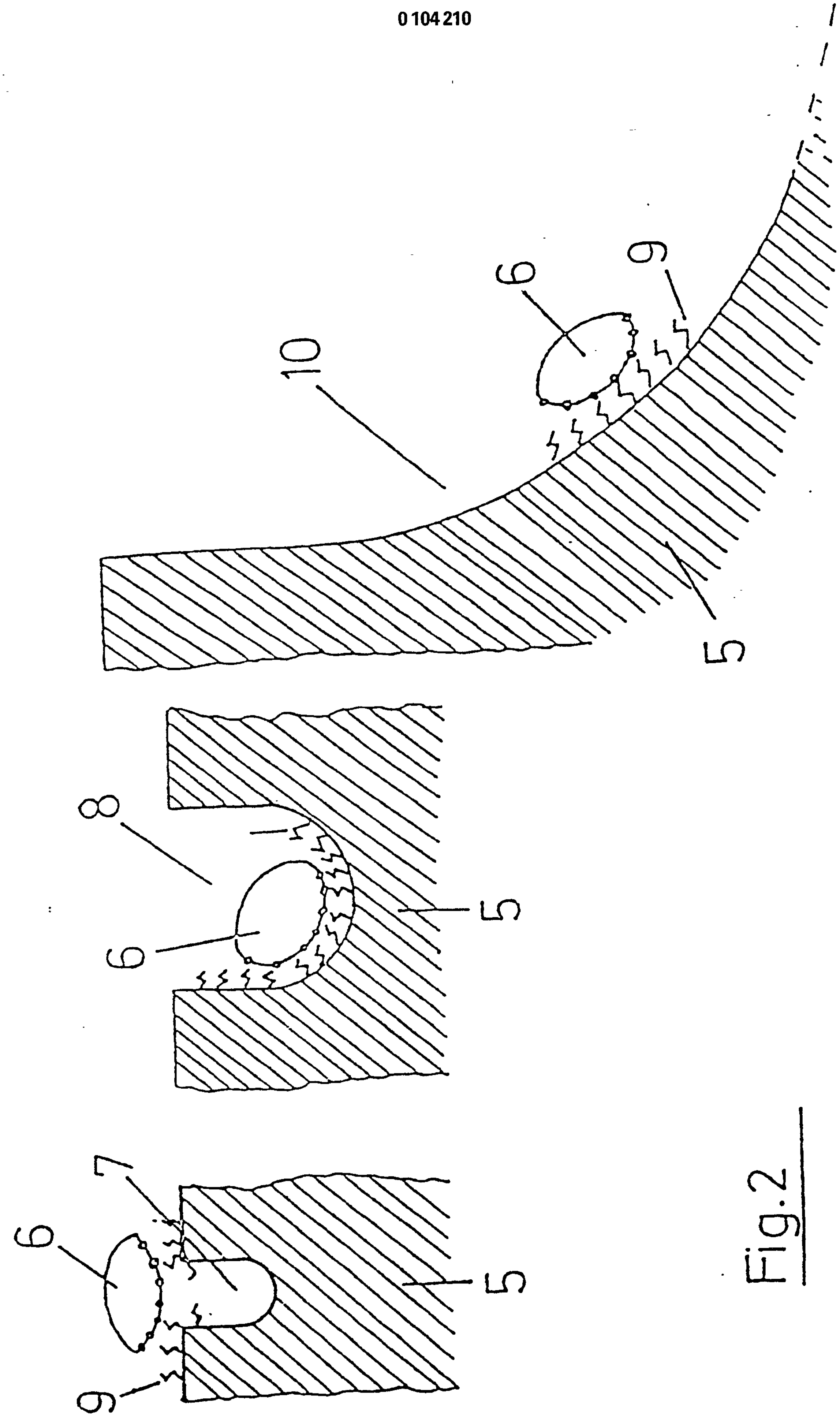


Fig.2

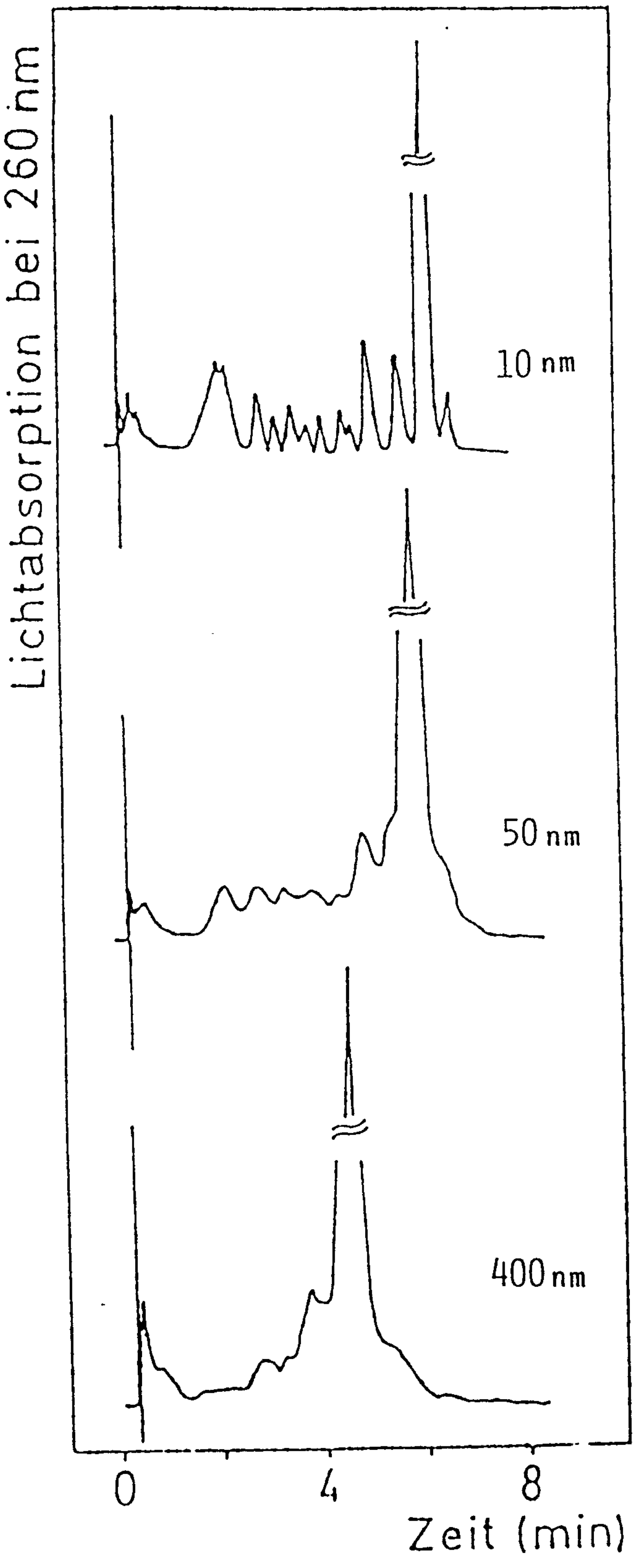


Fig. 3

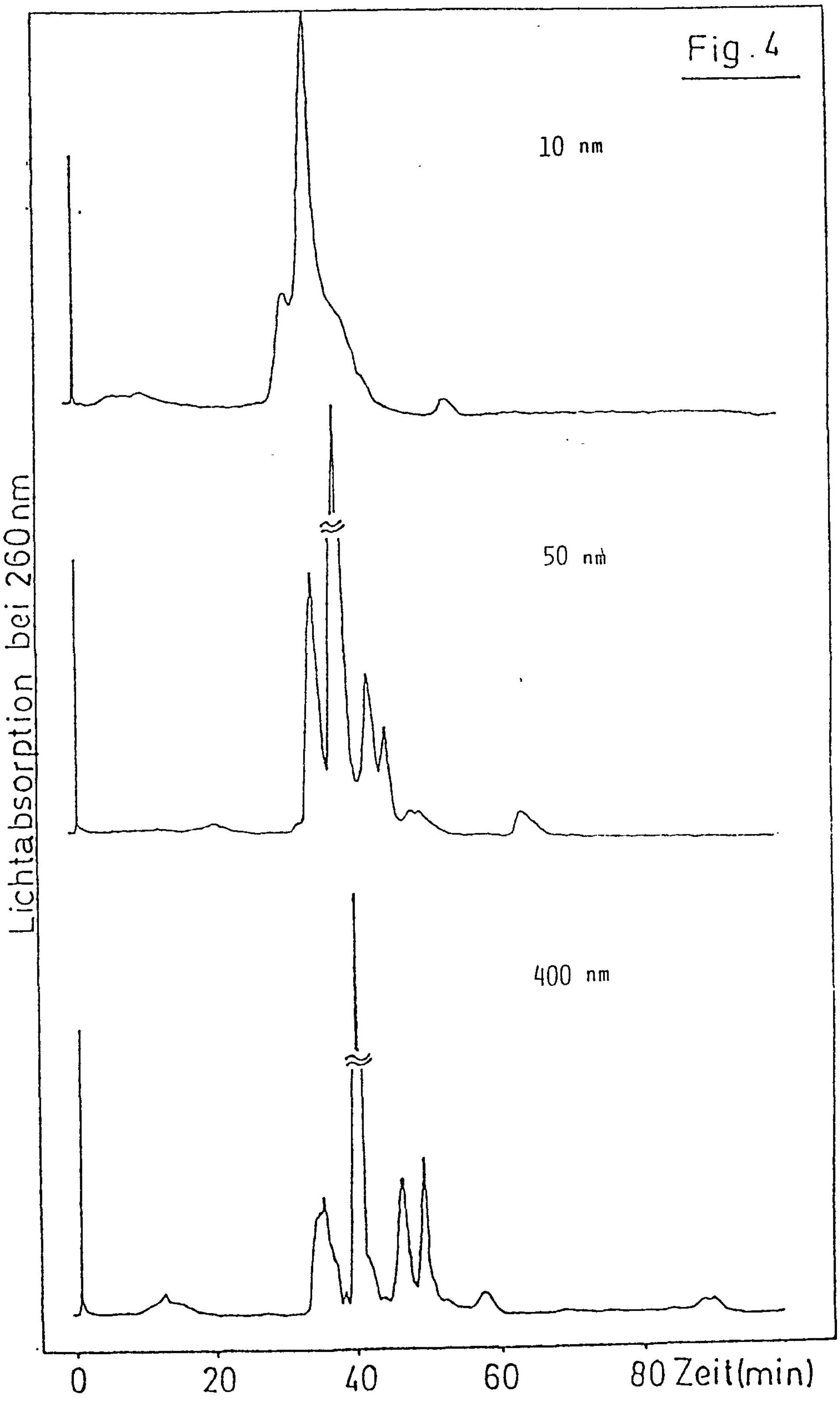
Fig. 4
10 nm
50 nm
400 nm
Lichtabsorption bei 260 nm
0
20
40
60
80 Zeit(min)

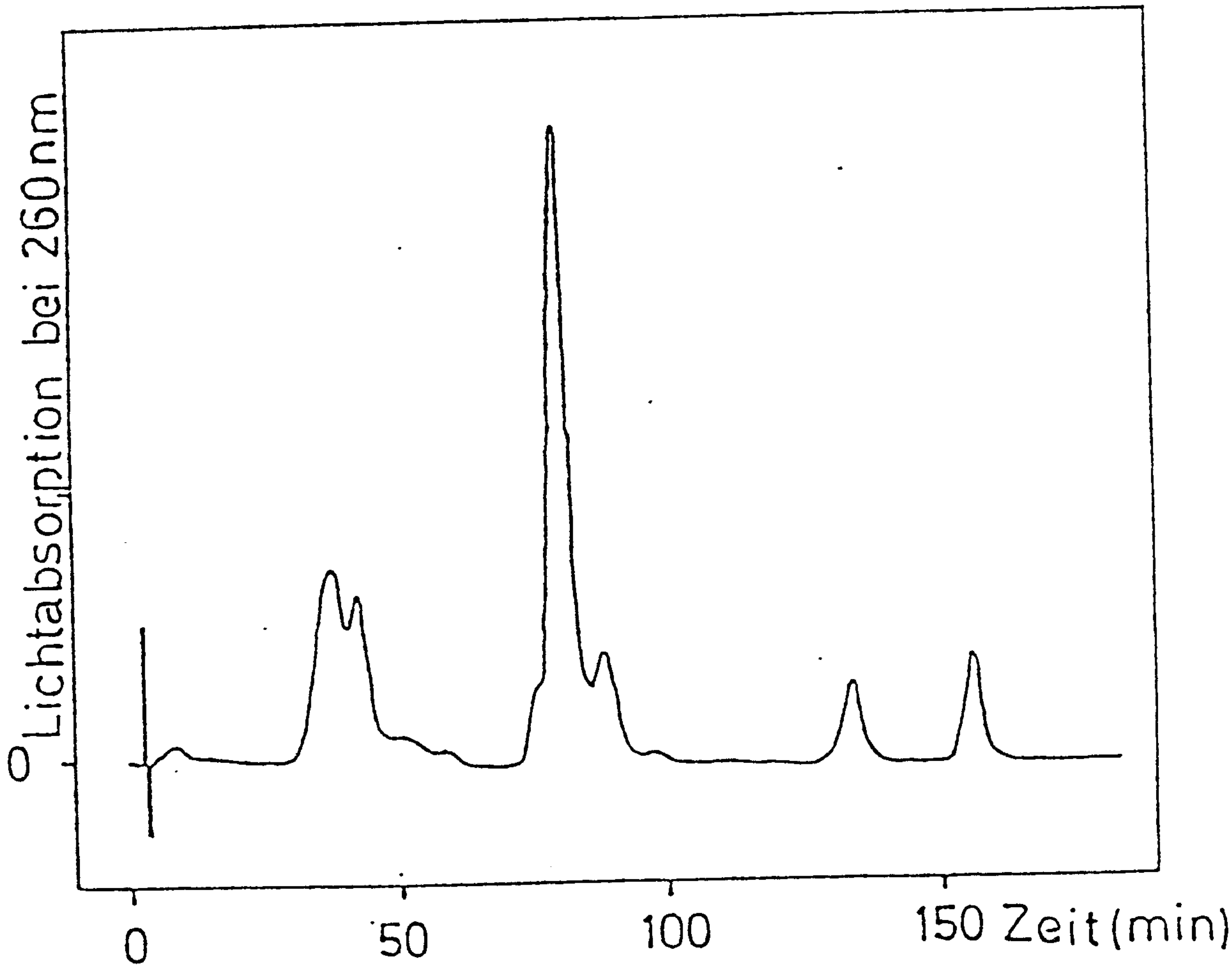


Fig.5